# EUROPÄISCHE PATENTANMELDUNG

(11) **EP 1 785 900 A1**
(43) Veröffentlichungstag der Anmeldung: **16.05.2007**
(21) Anmeldenummer: 05024082.9
(22) Anmeldetag: 04.11.2005
(51) Int. Cl.: G06F 21/00

(54) **Verfahren und System zum Übertragen von Daten von einer ersten Datenverarbeitungseinrichtung an eine zweite Datenverarbeitungseinrichtung**

(71) Anmelder: Hogl, Christian, 81377 München (DE)
(72) Erfinder: Hogl, Christian, 81377 München (DE)
(74) Vertreter: Reitstötter - Kinzebach

(57) **Zusammenfassung**

Die vorliegende Erfindung betrifft ein Verfahren und ein System zum Übertragen von Daten von einer ersten Datenverarbeitungseinrichtung (2) an eine zweite Datenverarbeitungseinrichtung (1), wobei die erste Datenverarbeitungseinrichtung (2) eine Anzeigeeinrichtung (3) aufweist. Bei dem erfindungsgemäßen Verfahren erzeugt die zweite Datenverarbeitungseinrichtung (1) eine verschlüsselte Eingabemaske und überträgt diese an die erste Datenverarbeitungseinrichtung (2), welche sie anzeigt. Die verschlüsselte Eingabemaske wird dadurch entschlüsselt, dass sie durch einen optischen Filter mit einem Entschlüsselungsmuster betrachtet wird und die zu übertragenden Daten werden mittels der durch den optischen Filter entschlüsselten Eingabemaske in die erste Datenverarbeitungseinrichtung (2) eingegeben und an die zweite Datenverarbeitungseinrichtung (1) übertragen. Das erfindungsgemäße System ist dadurch gekennzeichnet, dass der Anzeigeeinrichtung (3) der ersten Datenverarbeitungseinrichtung (2) ein optischer Filter zugeordnet ist, der ein Entschlüsselungsmuster enthält, die zweite Datenverarbeitungseinrichtung (1) einen Speicher (10) aufweist, in dem das Entschlüsselungsmuster oder Informationen über das Entschlüsselungsmuster des Filters gespeichert ist/sind, und die zweite Datenverarbeitungseinrichtung (1) eine Einrichtung (9) zum Erzeugen einer verschlüsselten Eingabemaske aufweist, wobei die verschlüsselte Eingabemaske in Abhängigkeit von dem gespeicherten Entschlüsselungsmuster oder den gespeicherten Informationen so erzeugbar ist, dass bei einer Anzeige der verschlüsselten Eingabemaske dieselbe durch Betrachten durch den optischen Filter entschlüsselt wird.

## Beschreibung

Die vorliegende Erfindung betrifft ein Verfahren und ein System zum Übertragen von Daten von einer ersten Datenverarbeitungseinrichtung an eine zweite Datenverarbeitungseinrichtung, wobei die erste Datenverarbeitungseinrichtung eine Anzeigeeinrichtung aufweist. Ferner betrifft die Erfindung ein Online-Banking-Verfahren sowie ein Verfahren zum Authentifizieren eines Nutzers gegenüber einem Dritten, insbesondere einem E-Commerce-Anbieter.

Die sichere Datenübertragung ist bei vernetzten Datenverarbeitungseinrichtungen sehr wichtig. Insbesondere wenn vertrauliche Daten über ein weltweites Netzwerk wie das Internet von einer Datenverarbeitungseinrichtung an eine andere Datenverarbeitungseinrichtung übertragen werden, ist das Risiko besonders groß, dass Dritte versuchen, Kenntnis von sicherheitsrelevanten oder vertraulichen Daten zu erlangen oder die Übertragung dieser Daten für eigene Zwecke auszunutzen. Für die Absicherung von sensiblen Daten oder Online-Geschäften mit einem E-Commerce-Anbieter im Internet wird häufig die schlichte Eingabe eines Nutzernamens und eines persönlichen Kennworts verwendet. Nachdem sich der Nutzer durch die Eingabe dieser Daten authentifiziert hat, wird z. B. das Online-Geschäft mit dem E-Commerce-Anbieter abgewickelt. Nachteilhaft an einer solchen Abwicklung ist, dass Dritte im Namen des berechtigen Nutzers Online-Geschäfte abwickeln können, wenn sie sich Zugang zu dem Nutzernamen und dem persönlichen Kennwort des Nutzers verschafft haben.

Es sind folgende Techniken bekannt, mit denen sich unberechtigte Dritte widerrechtlich vertrauliche Daten von Nutzern beschaffen:

Der Nutzer wird durch einen Link auf eine gefälschte Webseite geleitet, auf der er seinen Nutzernamen und sein Kennwort eingibt (sogenanntes "Phishing"). Ferner ist es bekannt, den Nutzer z. B. über eine Manipulation eines DNS (Domain Name System)-Servers zu einer gefälschten Webseite zu lenken, die auch bei korrekter manueller Eingabe der richtigen Adresse (URL) der Webseite auf einen gefälschten Server führt (sogenanntes "Pharming"). Des Weiteren ist es bekannt, die Daten, die von dem Nutzer zu einem Server gesandt werden sollen, entweder abzufangen und anstelle der Originaldaten in verändertem Kontext zum Server zu senden oder diese Daten zu kopieren und zu einem späteren Zeitpunkt in verändertem Kontext nochmals zum Server zu senden (sogenannte "Replay-Attacke").

Des Weiteren gibt es Programme, welche Tastatureingaben aufzeichnen und an unberechtigte Dritte über das Internet versenden. Es ist auch bekannt, zusätzlich die Aktionen von Auswahleinrichtungen für den Bildschirm, wie z. B. einer elektronischen Maus oder eines Touchpads in Verbindung mit den zugeordneten Bildschirminhalten aufzuzeichnen und unberechtigt an Dritte zu versenden. Diese Verfahren sind unter dem Begriff "Keylogging" bekannt.

Schließlich ist es bekannt, den Datenverkehr zwischen den beiden Datenverarbeitungseinrichtungen, welche die sicherheitsrelevanten Daten austauschen, über einen Computer eines unberechtigten Dritten unbemerkt zu leiten, so dass der Datenverkehr über diesen Computer läuft, was ein Abgreifen oder eine Manipulation des Datenverkehrs ermöglicht. Der zwischengeschaltete Computer kann sich hierbei gegenüber der Datenverarbeitungseinrichtung des Nutzers als Server und gegenüber dem Server als Nutzer ausgeben und leitet die Daten des Einen an den Anderen weiter, wobei er Informationen abgreift und/oder verfälscht. Dieses Verfahren ist unter dem Begriff "Man-In-The-Middle-Attacke" bekannt.

Die vorstehend genannten Verfahren zur unberechtigten Beschaffung von sicherheitsrelevanten bzw. vertraulichen Daten werden häufig auch in Kombination eingesetzt. Um die Datenübertragung besser abzusichern, gibt es insbesondere im Bereich des Online-Bankings oder beim Einloggen in Firmennetzwerke sicherere Übertragungsverfahren, welche die Kenntnis eines bestimmten persönlichen Kennwortes mit dem Besitz eines bestimmten Authentifizierungsmediums kombinieren. Diese Verfahren sind unter dem Begriff "Zwei-Faktor-. Authentifizierung" bekannt.

Im einfachsten Fall besitzt der Nutzer eine Liste mit Transaktionsnummern (TAN), wobei die Transaktionsnummern ggf. indiziert sind. Des Weiteren gibt es Vorrichtungen, die ein einmal zu verwendendes Passwort generieren, welches dann für die Transaktion eingegeben wird. Dieses Verfahren entspricht im Wesentlichen dem Verfahren, bei welchem indizierte Transaktionsnummern verwendet werden. Für jede Transaktion beim Online-Banking gibt der Nutzer zusätzlich zu seinem Kennwort eine Transaktionsnummer ein, welche nur einmal gültig ist. Eine Transaktion, bei welcher eine einfache Transaktionsnummer verwendet wird, ist vor allem anfällig gegenüber den vorstehend genannten "Phishing"- und "Pharming"-Verfahren. Falls eine indizierte Transaktionsnummer oder ein nur einmal gültiges Passwort verwendet wird, ist das Verfahren immer noch gegenüber der "Man-In-The-Middle-Attacke" anfällig.

Ferner sind Verfahren bekannt, bei denen zur Authentifizierung ein passives Speichermedium, z.B. eine CD-ROM, oder ein aktives Prozessormedium, wie eine Chipkarte oder ein USB-Stick mit integrierter Smart Card, verwendet wird. Das Prozessormedium wird mit dem Computer des Nutzers gekoppelt, woraufhin es z. B. über ein sogenanntes "Challenge/Response"-Verfahren mit dem Server der Bank kommuniziert. Diese Verfahren sind zwar sicher gegenüber den vorstehend genannten Verfahren zur widerrechtlichen Beschaffung von sicherheitsrelevanten Daten oder gegenüber der unberechtigten Ausführung oder Verfälschung von Transaktionen. Jedoch ist die Implementierung und der Betrieb solcher Systeme mit hohen Hardwarekosten verbunden. Selbst bei der Verwendung kostengünstiger Speicher- oder Prozessormedien und bei Verwendung von Lesegeräten oder Schnittstellen, die bereits für andere Zwecke im Computer des Nutzers vorgesehen sind, ergibt sich das Problem, dass die Nutzung zumeist nicht an beliebigen Computern an beliebigen Orten sichergestellt ist. Außerdem muss Zusatzsoftware und ggf. auch Zusatzhardware aufwändig installiert werden, bevor diese Verfahren eingesetzt werden können.

Es ist die Aufgabe der vorliegenden Erfindung, ein Verfahren und ein System der eingangs genannten Art bereitzustellen, mit denen eine sichere Übertragung von Daten zwischen zwei Datenverarbeitungseinrichtungen möglich ist. Dabei soll das System kostengünstig implementiert und das Verfahren kostengünstig betrieben werden können.

Diese Aufgabe wird durch ein Verfahren mit den Merkmalen des Anspruchs 1 und ein System mit den Merkmalen des Anspruchs 7 gelöst. Vorteilhafte Aus- und Weiterbildungen ergeben sich aus den Unteransprüchen.

Bei dem erfindungsgemäßen Verfahren erzeugt die zweite Datenverarbeitungseinrichtung verschlüsselte Eingabeanweisungen und überträgt diese an die erste Datenverarbeitungseinrichtung. Die erste Datenverarbeitungseinrichtung zeigt die verschlüsselten Eingabeanweisungen an. Die verschlüsselten Eingabeanweisungen werden dadurch entschlüsselt, dass sie durch einen optischen Filter mit einem Entschlüsselungsmuster betrachtet werden. Die zu übertragenden Daten werden mittels der durch den optischen Filter entschlüsselten Eingabeanweisungen in die erste Datenverarbeitungseinrichtung eingegeben und an die zweite Datenverarbeitungseinrichtung übertragen.

Durch die Verwendung des optischen Filters mit dem Entschlüsselungsmuster, der im Besitz eines Nutzers ist, kann ein Verfahren bereitgestellt werden, mit dem Daten sehr sicher übertragen werden können. Es werden im Wesentlichen die Sicherheitsstandards erzielt, die Verfahren bereitstellen, welche aktive Prozessormedien, wie z. B. eine Chipkarte, verwenden. Das Verfahren ist somit sicher gegenüber den vorgenannten "Phishing"- und "Pharming"-Verfahren. Außerdem bietet das Verfahren auch Schutz gegenüber den vorgenannten "Replay-Attacken" oder "Keylogging"-Verfahren, da die Dateneingabe für einen Dritten nur dann einen Sinn ergibt, wenn ihm das Entschlüsselungsmuster bekannt ist. Schließlich kann das Verfahren sehr kostengünstig implementiert und durchgeführt werden. Ein optischer Filter mit einem Entschlüsselungsmuster ist sehr kostengünstig herstellbar. Außerdem sind keine gesonderten Lesegeräte, wie beispielsweise bei Chipkarten, erforderlich, da als "Lesegerät" die Anzeigeeinrichtung der ersten Datenverarbeitungseinrichtung verwendet wird.

Unter Eingabeanweisungen wird hier jede Art von Information verstanden, die entweder Daten enthält, die ein Nutzer eingeben soll, oder die Anweisungen enthalten, auf welche Art ein Nutzer ihm bekannte Daten in die erste Datenverarbeitungseinrichtung eingeben soll. Es kann beispielsweise ein bestimmter Code verschlüsselt angezeigt werden, der nach der durch den optischen Filter bewirkten Entschlüsselung auf herkömmliche Weise in die erste Datenverarbeitungseinrichtung eingegeben wird. Ferner können Anweisungen verschlüsselt dargestellt werden, die dem Nutzer mitteilen, wie er die zu übertragenden Daten generieren soll. Des Weiteren ist es möglich, dass nur eine Eingabemaske angezeigt wird, die nach der Entschlüsselung durch den optischen Filter sichtbar wird und in die der Nutzer ihm bekannte Daten eingibt. Die Eingabemaske kann beispielsweise aus einem Ziffernfeld oder einer alphanumerischen Tastatur bestehen, wobei die Anordnung der Ziffern bzw. Buchstaben bei jeder Eingabemaske variieren kann.

Gemäß einer bevorzugten Ausgestaltung des erfindungsgemäßen Verfahrens werden die Eingabeanweisungen in Abhängigkeit von dem Entschlüsselungsmuster des Filters verschlüsselt. Dabei können die Eingabeanweisungen zumindest einmal pro Verbindungssession zwischen den beiden Datenverarbeitungseinrichtungen geändert werden. Außerdem könnten für jede Datenübertragung die Eingabeanweisungen geändert werden.

Gemäß einer bevorzugten Weiterbildung des erfindungsgemäßen Verfahrens sind die Eingabeanweisungen eine Eingabemaske. Die zu übertragenden Daten werden in die durch den optischen Filter entschlüsselte Eingabemaske in die erste Datenverarbeitungseinrichtung eingegeben. Insbesondere erfolgt die Dateneingabe bei der ersten Datenverarbeitungseinrichtung durch eine aufeinander folgende Auswahl von Bereichen der angezeigten Eingabemaske. Die entschlüsselte Eingabemaske zeigt beispielsweise eine Tastatur auf der Anzeigeeinrichtung ein. Die Positionen der Tastatur können dann beispielsweise mittels einer elektronischen Maus oder eines Touchpads oder anderer Bildschirmeingabegeräte ausgewählt werden, wodurch die Daten eingegeben werden. Ferner könnte die entschlüsselte Eingabemaske zusätzlich Anweisungen enthalten, wie die Daten in eine Tastatur eingegeben werden sollen. Diese Maßnahmen bieten insbesondere Schutz gegen Verfahren, welche Tastatureingaben oder Bildschirmeingaben aufzeichnen und an unberechtigte Dritte übertragen.

Das Entschlüsselungsmuster ist beispielsweise ein binäres Bildmuster. Beim Erzeugen der verschlüsselten Eingabeanweisungen kann zunächst ein zum Entschlüsselungsmuster komplementäres binäres Bildmuster generiert werden. Bei den Bildpunkten dieses komplementären Bildmusters, welche die Eingabeanweisungen bilden sollen, wird dann der Zustand der Bildpunkte gewechselt, so dass sie dem der entsprechenden Bildpunkte des Entschlüsselungsmusters entsprechen. Ferner könnte auch anders herum zunächst ein zum Entschlüsselungsmuster identisches, binäres Bitmuster generiert werden. Bei den Bildpunkten dieses Musters, welche die Eingabeanweisungen bilden sollen, wird dann der Zustand der Bildpunkte gewechselt, so dass sie komplementär zu denen der entsprechenden Bildpunkte des Entschlüsselungsmusters sind. Auf diese Weise lassen sich die verschlüsselten Eingabeanweisungen bei der zweiten Datenverarbeitungseinrichtung sehr einfach generieren. Es ist nur erforderlich, dass das Entschlüsselungsmuster des optischen Filters des jeweiligen Nutzers bekannt ist. Dieses Entschlüsselungsmuster oder Informationen über dieses Muster können von der zweiten Datenverarbeitungseinrichtung abgespeichert werden, wenn der optische Filter mit diesem Muster an einen Nutzer übersandt wird. Die Eingabeanweisungen werden somit vorzugsweise grafisch in Form eines Musters angezeigt.

Allgemein wird das anzuzeigende Muster mit verschlüsselten Eingabeanweisungen aus einem vorgegebenen Entschlüsselungsmuster wie folgt gebildet:

Eine z.B. schwarz-weiß dargestellte Eingabemaske kann als Matrix bestehend aus logischen Ja-Werten für schwarze Bildpunkte und logischen Nein-Werten für weiße Bildpunkte interpretiert werden. Ein zufällig erzeugtes rot-grünes Folienmuster kann als Matrix bestehend aus logischen Ja-Werten für grüne Bildpunkte und logischen Nein-Werten für rote Bildpunkte interpretiert werden. Bei der Verschlüsselung gelangt man vom rot-grünen Folienmuster (Entschlüsselungsmuster) F zum rot-grünen Anzeigemuster A, indem man dort, wo positionsgleiche Bildpunkte der Eingabemaske E schwarz sind, die Farbe des Folienmuster-Punktes von rot auf grün oder von grün auf rot wechselt. Diese Operation lässt sich in Boolescher Algebra als XOR Verknüpfung zwischen F und E darstellen. Es gilt also (für alle korrespondierenden Punkte der jeweiligen Matrizen) A = F XOR E bzw. A = E XOR F (die XOR-Verknüpfung ist kommutativ).

Bei der Entschlüsselung bewirkt nun die Überlagerung des rot-grünen Anzeigemusters mit dem rot-grünen Entschlüsselungsmuster des optischen Filters, wenn man im Ergebnis einen hellen (also roten oder grünen) Bildpunkt als logisches Nein, und einen dunklen (also schwarzen) Bildpunkt als logisches Ja interpretiert, wiederum eine XOR-Verknüpfung. Es gilt also, dass das wahrnehmbare Resultat R gleich A XOR F ist. Aus A = E XOR F und R = A XOR F folgt nun: R = (E XOR F) XOR F. Da die XOR-Verknüpfung auch assoziativ ist, gilt auch R = E XOR (F XOR F). Daraus folgt R = E. Das wahrnehmbare Resultat entspricht der Eingabemaske.

Gemäß einer bevorzugten Weiterbildung des erfindungsgemäßen Verfahrens enthalten die Eingabeanweisungen einen Code, der nach der durch den optischen Filter bewirkten Entschlüsselung in die erste Datenverarbeitungseinrichtung eingegeben und an die zweite Datenverarbeitungseinrichtung übertragen wird. Aus der Übertragung des Codes kann man ableiten, dass der Nutzer im Besitz des optischen Filters mit dem Entschlüsselungsmuster ist.

Gemäß einer weiteren bevorzugten Ausgestaltung des erfindungsgemäßen Verfahrens werden zum Ausrichten der angezeigten verschlüsselten Eingabemaske zu dem Filter Positionen von Justierhilfen des Filters bei der Anzeigeeinrichtung ausgewählt und die Auswahl an die zweite Datenverarbeitungseinrichtung übertragen. Die Eingabeanweisungen werden dann in Abhängigkeit von den ausgewählten Positionen erzeugt und/oder angezeigt. Auf diese Weise ist es möglich, die Eingabeanweisungen für jede Datenübertragung individuell an die gerade verwendete Anzeigeeinrichtung anzupassen. Dies ermöglicht es einem Nutzer, die Datenübertragung vollkommen orts- und geräteunabhängig durchzuführen. Die verwendete Datenverarbeitungseinrichtung des Nutzers muss nur eine Anzeigeeinrichtung besitzen.

Erfindungsgemäß wird außerdem ein Verfahren zum Authentifizieren eines Nutzers gegenüber einem E-Commerce-Anbieter oder einer anderen Datenverarbeitungseinrichtung vorgeschlagen. Bei diesem Verfahren gibt der Nutzer einen persönlichen Code in seine Datenverarbeitungseinrichtung ein. Dieser Code wird dann an die Datenverarbeitungseinrichtung des E-Commerce-Anbieters übertragen. Die Eingabe und Übertragung dieses persönlichen Codes des Nutzers erfolgt dabei nach dem erfindungsgemäßen Verfahren wie es vorstehend beschrieben wurde.

Des Weiteren wird erfindungsgemäß ein Online-Banking-Verfahren vorgeschlagen, bei dem sich ein Nutzer bei einem Bankserver authentifiziert und danach die für einen Online-Überweisungsvorgang erforderlichen Daten eingibt und diese Daten an den Bankserver übertragen werden. Dabei wird die Authentifizierung des Nutzers und die Eingabe und Übertragung zumindest eines Teils der für den Online-Überweisungsvorgang erforderlichen maßgeblichen Daten, z. B. Empfänger, Kontonummer und/oder Betrag, durch das vorstehend beschriebene erfindungsgemäße Verfahren durchgeführt. Auf diese Weise kann sich der Nutzer beim Online-Banking auch gegen sogenannte "Man-In-The-Middle-Attacken" schützen.

Schließlich könnten gemäß einer anderen Ausgestaltung die für den Online-Überweisungsvorgang erforderlichen maßgeblichen Daten, z. B. Empfänger, Kontonummer und/oder Betrag, auf herkömmliche Weise eingegeben werden. Danach wird eine Bestätigungsvorlage mit einer Anweisung, wie eine Bestätigung einzugeben ist, durch das vorstehend beschriebene erfindungsgemäße Verfahren angezeigt. Die Bestätigung wird von dem Nutzer dann nach Entschlüsselung der Bestätigungsvorlage an Hand der Anweisung eingegeben und schließlich an den Bankserver übertragen.

Bei einem herkömmlichen Online-Überweisungsvorgang könnte ein zwischengeschalteter Computer des unberechtigten Dritten z. B. beim Login-Vorgang die Daten in beiden Richtungen unverändert lassen und sofort weiter übermitteln. Auf diese Weise könnte ein unberechtigte Dritter den Login-Vorgang passieren und die danach ablaufende Kommunikation manipulieren, in dem z. B. der Betrag und die Empfängerdaten der Online-Überweisungen modifiziert werden. Auch könnte der unberechtigte Dritte bei dem herkömmlichen Online-Überweisungsvorgang dem Nutzer vortäuschen, die korrekte Überweisung sei ausgeführt worden. Bei dem erfindungsgemäßen Online-Banking-Verfahren sind diese Manipulationen nicht möglich, da alle sicherheitsrelevanten Daten über die verschlüsselten Eingabeanweisungen eingegeben werden können, so dass auch ein wirkungsvoller Schutz gegen "Man-In-The-Middle-Attacken" bereitgestellt werden kann.

Das erfindungsgemäße System zum Übertragen von Daten von einer ersten Datenverarbeitungseinrichtung an eine zweite Datenverarbeitungseinrichtung ist dadurch gekennzeichnet, dass ein optischer Filter für die Anzeigeeinrichtung der ersten Datenverarbeitungseinrichtung vorgesehen ist, der ein Entschlüsselungsmuster enthält, die zweite Datenverarbeitungseinrichtung einen Speicher aufweist, in dem das Entschlüsselungsmuster oder Informationen über das Entschlüsselungsmuster des Filters gespeichert ist/sind, und die zweite Datenverarbeitungseinrichtung eine Einrichtung zum Erzeugen einer verschlüsselten Eingabemaske aufweist, wobei die verschlüsselte Eingabemaske in Abhängigkeit von dem gespeicherten Entschlüsselungsmuster oder den gespeicherten Informationen so erzeugbar ist, dass bei einer Anzeige der verschlüsselten Eingabeanweisungen dieselben durch Betrachten durch den optischen Filter entschlüsselt werden.

Das erfindungsgemäße System besitzt den Vorteil, dass es sehr kostengünstig implementierbar ist, da neben zwei üblichen miteinander kommunizierenden Datenverarbeitungseinrichtungen nur ein optischer Filter mit dem Entschlüsselungsmuster bereitgestellt werden muss. Dies ist sehr kostengünstig möglich. Wie bereits vorstehend erwähnt, ist mit dem erfindungsgemäßen System ferner eine sehr sichere Übertragung von vertraulichen oder sicherheitsrelevanten Daten zwischen den zwei Datenverarbeitungseinrichtungen möglich.

Das Entschlüsselungsmuster kann insbesondere eine binäre Codierung enthalten. Es handelt sich somit um ein codiertes Pixelraster. Die Verschlüsselung der Eingabemaske und das Entschlüsselungsmuster können auf verschiedene Weisen zusammenwirken, wobei beim Betrachten der verschlüsselten Eingabemaske nur ein zufällig aussehendes Muster ohne Informationsgehalt sichtbar ist und erst der optische Filter den Informationsgehalt der Eingabeanweisungen sichtbar macht. Das Entschlüsselungsmuster des optischen Filters kann z. B. Bildpunkte bzw. Bildbereiche aus optischen Filtern für zwei Komplementärfarben enthalten. Beispielsweise können die einzelnen Bildpunkte aus Bereichen mit Filtern bestehen, die nur rotes oder nur grünes Licht durchlassen. Eine solche Komplementärfarbencodierung lässt sich sehr einfach und kostengünstig implementieren. Ferner ist eine Codierung über senkrecht zueinander stehende Polarisationsfilter denkbar, sofern mit der Anzeigeeinrichtung polarisiertes Licht emittierbar ist. Des Weiteren sind eine Vielzahl von anderen grafischen Codierungen der Eingabeanweisungen möglich.

Der optische Filter ist vorzugsweise eine zumindest teilweise transparente Folie oder Karte. Die Folie oder Karte kann z. B. Kreditkartengröße haben. Bevorzugt besteht sie aus einem an der Anzeigeeinrichtung haftenden Kunststoff. Auf diese Weise kann der Filter sehr einfach mit der Anzeigeeinrichtung verbunden werden. Zum einfachen Ausrichten des Filters zu der angezeigten oder anzuzeigenden verschlüsselten Eingabemaske bzw. der Anzeigeeinrichtung kann der optische Filter insbesondere Justierhilfen aufweisen.

Bei dem Entschlüsselungsmuster handelt es sich insbesondere um ein für einen Nutzer individuell codiertes Zufallsmuster.

Die erste Datenverarbeitungseinrichtung weist vorzugsweise eine Eingabeeinrichtung auf, über die Daten mittels der entschlüsselten Eingabemaske eingebbar sind. Die Eingabeeinrichtung ist bevorzugt eine Auswahleinrichtung für Bereiche der Anzeigeeinrichtung. Es kann sich hierbei z. B. um eine elektronische Maus, ein Touchpad oder ein berührungsempfindliches Display handeln.

Die Erfindung wird nun anhand eines Ausführungsbeispiels mit Bezug zu den Zeichnungen erläutert.
- Fig. 1: zeigt schematisch ein Ausführungsbeispiel des erfindungsgemäßen Systems zum Übertragen von Daten zwischen zwei Datenverarbeitungseinrichtungen,
- Fig. 2: zeigt eine uncodierte Eingabemaske,
- Fig. 3: zeigt das Entschlüsselungsmuster,
- Fig. 4: zeigt die verschlüsselte Eingabemaske,
- Fig. 5: zeigt die entschlüsselte Eingabemaske und die
- Fig. 6 und 7: veranschaulichen die Verschlüsselung einer Ziffer nach dem erfindungsgemäßen Verfahren.

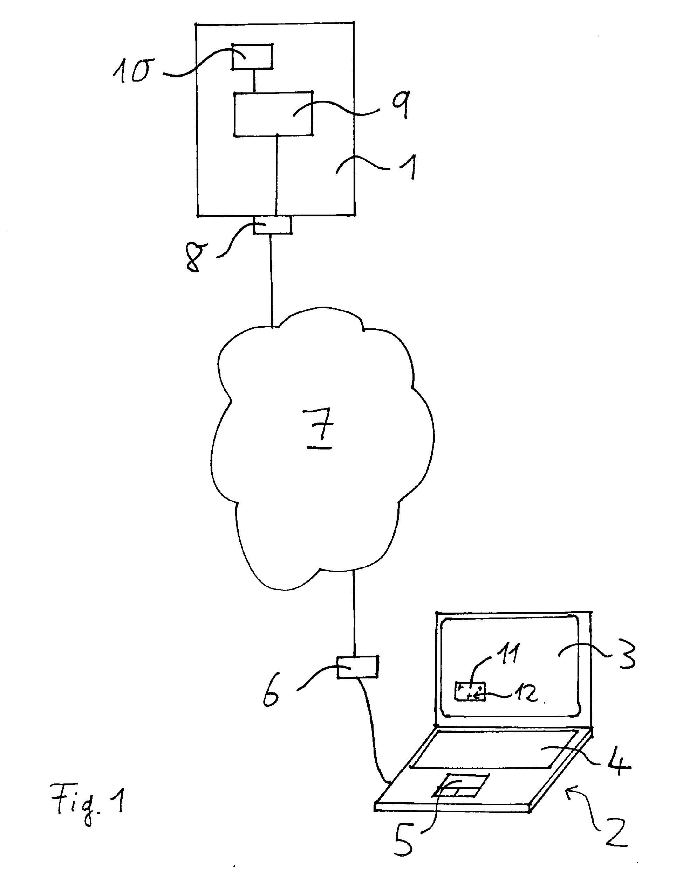

Mit Bezug zu Fig. 1 wird ein Ausführungsbeispiel des erfindungsgemäßen Systems erläutert:

Das System umfasst zwei Datenverarbeitungseinrichtungen, zwischen denen Daten übertragen werden können. Die erste Datenverarbeitungseinrichtung ist beispielsweise ein Computer 2 eines Nutzers und die zweite Datenverarbeitungseinrichtung ein Server 1, an den vertrauliche oder sicherheitsrelevante Daten von dem Computer 2 übertragen werden sollen.

Der Computer 2 des Nutzers ist an sich bekannt. Er weist eine Anzeigeeinrichtung 3, z. B. eine Flüssigkristallanzeige oder ein anderer Monitor, eine Tastatur 4 und eine Eingabeeinrichtung 5 auf, über welche Bildschirmbereiche ausgewählt werden können. Bei der Eingabeeinrichtung 5 kann es sich um eine herkömmliche elektronische Maus oder ein sogenanntes Touchpad handeln. Es wird darauf hingewiesen, dass statt des Computers 2 eine beliebige andere Datenverarbeitungseinrichtung verwendet werden kann, sofern sie eine Anzeigeeinrichtung umfasst und sofern auf irgendeine Weise Daten an eine andere Datenverarbeitungseinrichtung übertragbar sind.

Der Computer 2 ist über ein Modem 6 an ein Netzwerk, wie z. B. an das Internet 7, angeschlossen. Gleichermaßen ist auch der Server 1 über ein Modem 8 an das Internet 7 angeschlossen, so dass über das Internet 7 Daten von dem Computer 2 an den Server und umgekehrt übertragen werden können.

Des Weiteren ist ein optischer Filter vorgesehen, der im Besitz desjenigen ist, der die Daten von dem Computer 2 an den Server 1 übertragen will. Es ist möglich, mittels des optischen Filters Daten vom Computer 2 oder von beliebigen anderen Datenverarbeitungseinrichtungen an den Server 1 zu übertragen. Der optische Filter ist im hier erläuterten Ausführungsbeispiel eine zumindest teilweise transparente Folie 11. Die Folie 11 besteht aus einem Kunststoff, der an einer Anzeigeeinrichtung 3, wie dem Display des Computers 2, haftet.

Auf die Folie 11 ist ein binäres, für jeden Benutzer individuell codiertes Zufallsmuster aufgebracht. Dieses Zufallsmuster dient als Entschlüsselungsmuster für Eingabeanweisungen, hier insbesondere für eine verschlüsselte Eingabemaske, die von dem Server 1 an den Computer 2 übertragen wird, wie es später im Detail erläutert wird.

Der Server 1 umfasst einen Speicher 10, der eine Datenbank mit den Nutzern des Systems und den ihnen zugeordneten Zufallsmustern, d.h. den Entschlüsselungsmustern, umfasst. Ferner besitzt der Server 1 eine Recheneinheit 9, die eine verschlüsselte Eingabemaske in Abhängigkeit von dem gespeicherten Entschlüsselungsmuster eines Nutzers erzeugen kann. Die verschlüsselte Eingabemaske wird von der Recheneinheit 9 so erzeugt, dass bei einer Anzeige der verschlüsselten Eingabemaske dieselbe durch Betrachten durch den optischen Filter des zugehörigen Nutzers, d.h. durch die Folie 11 mit dem Entschlüsselungsmuster des zugehörigen Nutzers, entschlüsselt wird, so dass der Nutzer die Eingabemaske entschlüsseln kann.

Im Folgenden wird ein Ausführungsbeispiel des erfindungsgemäßen Verfahrens zur Übertragung von Daten sowie weitere Details des erfindungsgemäßen Systems erläutert:

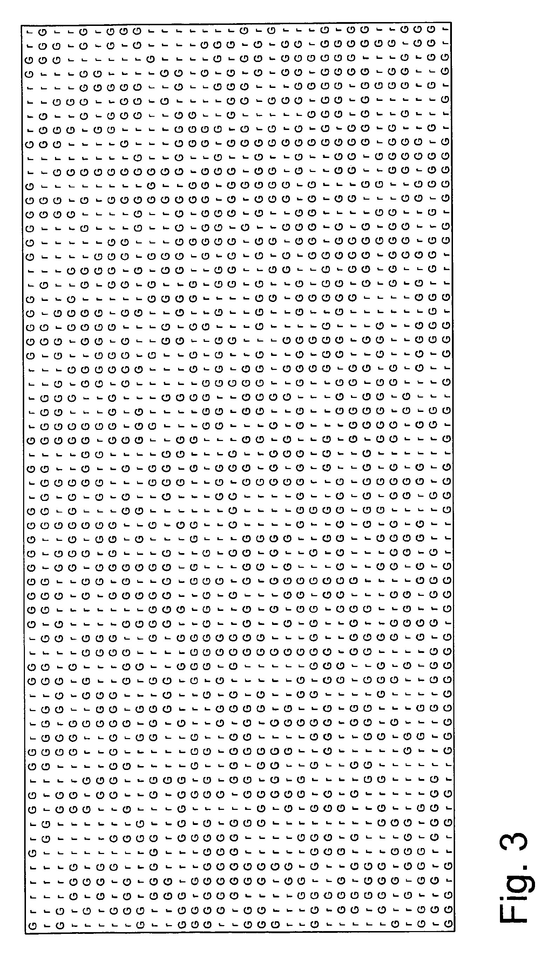

Der Betreiber des Servers 1 erzeugt bei der Registrierung jedes Nutzers eine Folie 11 mit einem individuell codierten Zufallsmuster und sendet ihm diese z. B. per Post zu. Ferner wäre es möglich, dass dem Nutzer, z. B. per E-Mail, Grafikdaten zugesandt werden, die er selbst ausdrucken kann, um die Folie 11 zu erzeugen. Dieses Zufallsmuster dient der späteren Entschlüsselung einer Eingabemaske. Es wird daher auch Entschlüsselungsmuster genannt. In Fig. 3 ist ein solches Entschlüsselungsmuster gezeigt.

Ferner könnte potentiellen Nutzern das Entschlüsselungsmuster auch auf folgende Weise zur Verfügung gestellt werden: Eine Vielzahl von Entschlüsselungsmustern wird allgemein zugänglich, z. B. in Zeitschriften oder im Internet, veröffentlicht, wobei jedem Entschlüsselungsmuster Koordinaten zugeordnet sind. Der Nutzer könnte dann ein entsprechendes Entschlüsselungsmuster auswählen, z.B. in dem er es ausschneidet, und vor der Verwendung dieses Entschlüsselungsmusters dem Server 1 mitteilen, welche Koordinaten das von ihm ausgewählte Entschlüsselungsmuster trägt, woraus der Server 1 das entsprechende Entschlüsselungsmuster des Nutzers ermitteln kann.

In dem hier erläuterten Ausführungsbeispiel ist das Entschlüsselungsmuster binär über Komplementärfarben codiert. Das Entschlüsselungsmuster weist somit zufällig angeordnete z. B. rote und grüne Filterbereiche auf. Aufgrund der Schwarz-Weiß-Darstellung in den beiliegenden Figuren sind in diesen die roten Bildpunkte durch das Symbol "r" und die grünen Bildpunkte durch das Symbol "G" dargestellt. Schwarze und weiße Bildpunkte erscheinen weiterhin schwarz und weiß.

Ein registrierter Nutzer will nun mittels des Computers 2 vertrauliche oder sicherheitsrelevante Daten an den Server 1 übertragen. Hierzu stellt der Nutzer über den Computer 2 und das Modem 6 eine Verbindung mit dem Internet 7 her und ruft durch Eingabe einer entsprechenden Internetadresse die Webseite des Servers 1 auf. Daraufhin gibt er einen Nutzernamen an, welcher über das Internet 7 dem Server 1 übertragen wird.

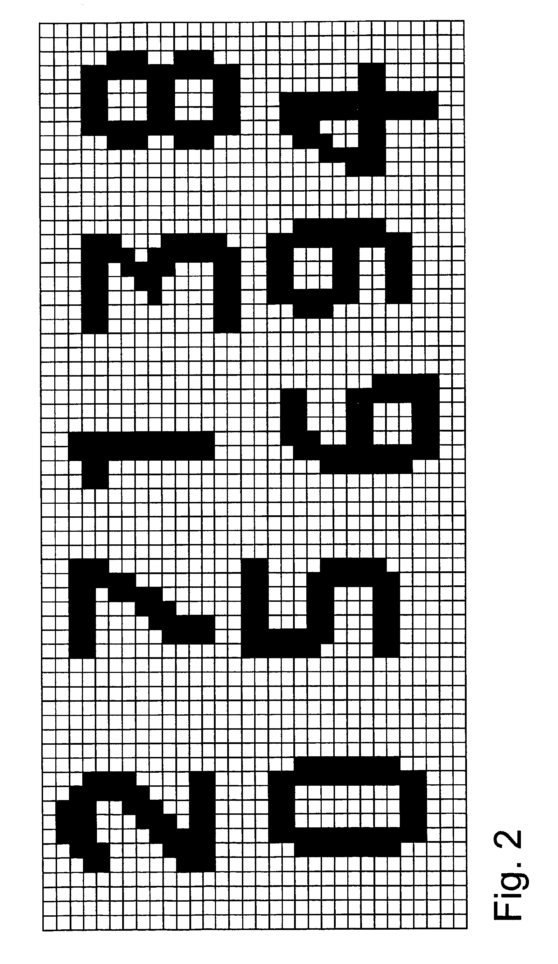

Im vorliegenden Ausführungsbeispiel will der Nutzer einen Zifferncode an den Server 1 übertragen. Der Server 1 erzeugt daher mittels der Recheneinheit 9 zunächst eine Eingabemaske, bei welcher in einem binären Muster Ziffern auf zufällige Weise angeordnet sind. Dieses Ausgangsmuster ist in Fig. 2 gezeigt. Es wird für jede Datenübertragung neu erzeugt. Gleichermaßen könnte die Eingabemaske auch Buchstaben oder andere Zeichen enthalten. Ferner könnte ein Text enthalten sein, welcher bestimmte Anweisungen für die Eingabe der zu übertragenden Daten enthält.

Nun ermittelt die Recheneinheit 9 anhand der in dem Speicher 10 gespeicherten Datenbank das Entschlüsselungsmuster des Nutzers. Die Recheneinheit 9 erzeugt ein zu diesem Entschlüsselungsmuster komplementäres Muster: Überall dort, wo das Entschlüsselungsmuster des Nutzers einen grünen Filterbereich aufweist, wird ein roter Bildpunkt erzeugt und überall dort, wo das Entschlüsselungsmuster des Nutzers einen roten Filterbereich aufweist, wird ein grüner Bildpunkt erzeugt. Würde eine Anzeigeeinrichtung 3 dieses Zwischenmuster anzeigen und würde ein Nutzer dieses Muster durch ein exakt zu dem Muster ausgerichtetes Entschlüsselungsmuster der Fig. 3 betrachten, würde sich eine schwarze Fläche ergeben, da der von der Anzeigeeinrichtung 3 emittierte rote Bildpunkt nicht durch den Grünfilter des Entschlüsselungsmusters gelangen könnte und gleichermaßen das von einem grünen Bildpunkt emittierte grüne Licht nicht durch den Rotfilter des Entschlüsselungsmusters gelangen könnte.

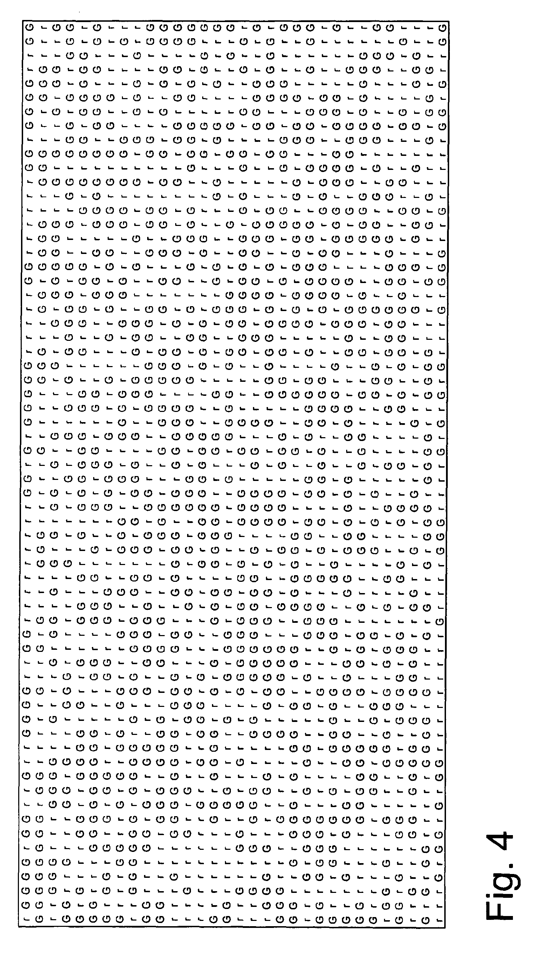

Die Recheneinheit 9 kombiniert anschließend das Zwischenmuster mit der zu verschlüsselnden Eingabemaske, die in Fig. 2 gezeigt ist. Und zwar wird bei allen Bildpunkten des Zwischenmusters, bei denen bei der Eingabemaske, wie sie in Fig. 2 gezeigt ist, ein Bildpunkt Information zur Anzeige der Ziffern enthält, d.h. der Bildpunkt im gezeigten Beispiel schwarz ist, der Farbzustand des Zwischenmusters gewechselt. Ein roter Bildpunkt wird an diesen Positionen somit grün und ein grüner Bildpunkt rot. Die auf diese Weise erzeugte verschlüsselte Eingabemaske ist in Fig. 4 gezeigt.

Die verschlüsselte Eingabemaske wird von dem Server 1 über das Internet 7 an den Computer 2 des Nutzers übertragen. Im Prinzip könnten unberechtigte Dritte sowohl Kenntnis von dem Nutzernamen des Nutzers 2, als auch von der verschlüsselten Eingabemaske erlangen, da diese Informationen jeweils über das Internet 7 übertragen werden. Die Informationen würden einem unberechtigten Dritten jedoch nichts nutzen, da für die Entschlüsselung der verschlüsselten Eingabemaske das Entschlüsselungsmuster der Folie 11 erforderlich ist, welche sich im Besitz des Nutzers befindet. Das Verfahren bietet somit eine zweistufige Sicherheit. Ein unberechtigter Dritter erhält keine Kenntnis von den übertragenen Daten, wie z. B. dem Passwort, da er der Eingabe über die verschlüsselte Eingabemaske keine Bedeutung beimessen kann. Ferner kann ein unberechtigter Dritter ein Passwort nicht eingeben, selbst wenn er auf andere Weise Kenntnis von dem Passwort erlangt hat, da er die Eingabemaske nicht entschlüsseln kann.

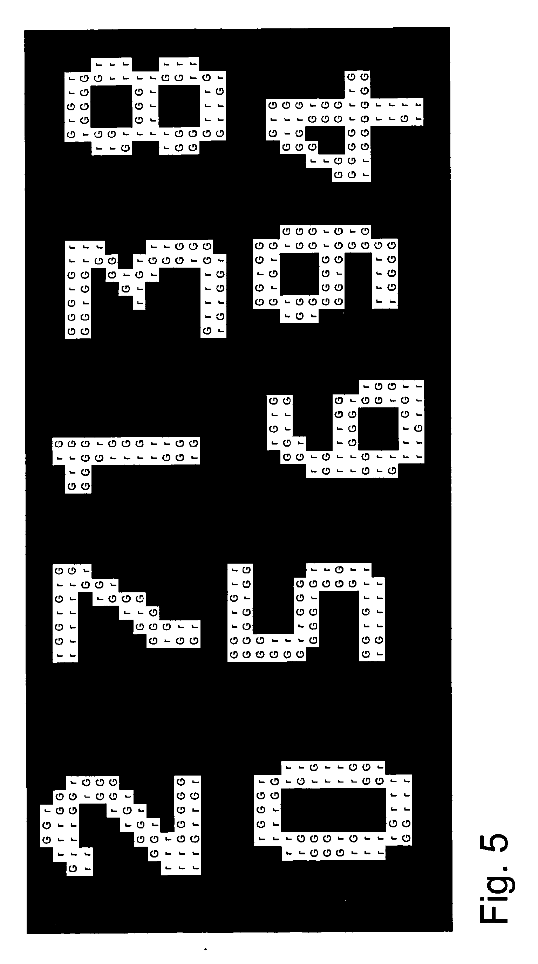

Die verschlüsselte Eingabemaske wird nun von der Anzeigeeinrichtung 3 des Computers 2 angezeigt. Der Nutzer kann sich nun vergewissern, dass das angezeigte Muster tatsächlich ein zufällig aussehendes Rot-Grün-Muster ist. Zur Entschlüsselung der verschlüsselten Eingabemaske legt der Nutzer nun die Folie 11 an der Anzeigeeinrichtung 3 an, in dem er sie beispielsweise auf die Anzeigeeinrichtung 3 auflegt. Zur exakten Ausrichtung der Folie 11 zu der angezeigten verschlüsselten Eingabemaske können auf der Folie 11 Justierhilfen 12 angebracht sein, welche die Ausrichtung zu der angezeigten Eingabemaske erleichtern. Betrachtet der Nutzer nun die Eingabemaske, ergibt sich das in Fig. 5 dargestellte Bild. Es ergibt sich ein Ziffernfeld aus roten und grünen Bildpunkten innerhalb eines schwarzen Hintergrunds. Das Ziffernfeld entspricht hinsichtlich der Positionierung der Ziffern dem in Fig. 2 gezeigten Ziffernfeld. Nur bei den Bildpunkten, die das Ziffernfeld der Fig. 2 bilden, sind nämlich rote und grüne Bildpunkte bzw. Filterbereiche in Übereinstimmung, so dass Licht durch den optischen Filter der Folie 11 durchtreten kann. Außerhalb des Ziffernfeldes ist der Filter der Folie 11 komplementär zur angezeigten verschlüsselten Eingabemaske, so dass kein Licht durch den Filter der Folie 11 hindurchtreten kann. Es ergibt sich in diesen Bereichen eine schwarze Fläche.

Des Weiteren könnte das Entschlüsselungsmuster und die verschlüsselte Eingabemaske auch umgekehrt so zusammenwirken, dass die Bildpunkte, welche die Eingabemaske darstellen, schwarz erscheinen und die Umgebung in Komplementärfarben, z. B. in Rot und in Grün, dargestellt wird.

Zur Eingabe des zu übertragenden Zifferncodes kann der Nutzer nun die Bereiche auf der Eingabemaske nacheinander auswählen, die dem Zifferncode entsprechen. Er kann beispielsweise mittels des Touchpads 5 oder mittels einer Maus die entsprechenden Ziffern nacheinander auswählen. Die entsprechende Auswahl wird dann über das Internet 7 an den Server 1 übertragen. Ein unberechtigter Dritter, welcher das Entschlüsselungsmuster auf der Folie 11 nicht kennt, kann den auf diese Weise übertragenen Daten keinen Inhalt entnehmen, da er die Eingabemaske nicht kennt. Andererseits kann ein unberechtigter Dritter auch nicht eine ihm bekannte Eingabemaske erzeugen und sie an den Computer 2 des Nutzers übertragen, um sich als Server 1 auszugeben, da hierfür die Kenntnis des Entschlüsselungsmusters auf der Folie 11 des entsprechenden Nutzers erforderlich ist. Auf diese Weise können somit beliebige Daten, welche über die von dem Server übertragene verschlüsselte Eingabemaske eingegeben werden, von dem Computer 2 des Nutzers an den Server 1 übertragen werden.

Gemäß einer Weiterbildung des Verfahrens wird die Folie 11 nicht zu der bereits angezeigten Eingabemaske ausgerichtet, sondern die Eingabemaske wird in Abhängigkeit von der verwendeten Anzeigeeinrichtung 3 erzeugt und relativ zu dem Entschlüsselungsmuster der Folie 11 ausgerichtet. Hierfür bringt der Nutzer die Folie 11 zunächst an einer beliebigen Stelle der Anzeigeeinrichtung 3 an und wählt daraufhin z. B. mit dem Touchpad 5 zumindest zwei Justierhilfen 12, bevorzugt drei oder vier Justierhilfen 12, auf der Anzeigeeinrichtung 3 aus. Diese Auswahl wird über das Internet 7 an den Server 1 übertragen. Die Recheneinheit 9 des Servers 1 kann die verschlüsselte Eingabemaske nun hinsichtlich ihrer Positionierung auf der Anzeigeeinrichtung 3 und hinsichtlich ihrer Größe so anpassen, dass sie passgenau mit dem Entschlüsselungsmuster der Folie 11 ausgerichtet ist, ohne dass der Nutzer die Folie 11 auf der Anzeigeeinrichtung 3 verschieben muss. Diese Weiterbildung vereinfacht den Einsatz der Folie 11 auf unterschiedlichen Anzeigeeinrichtungen 3.

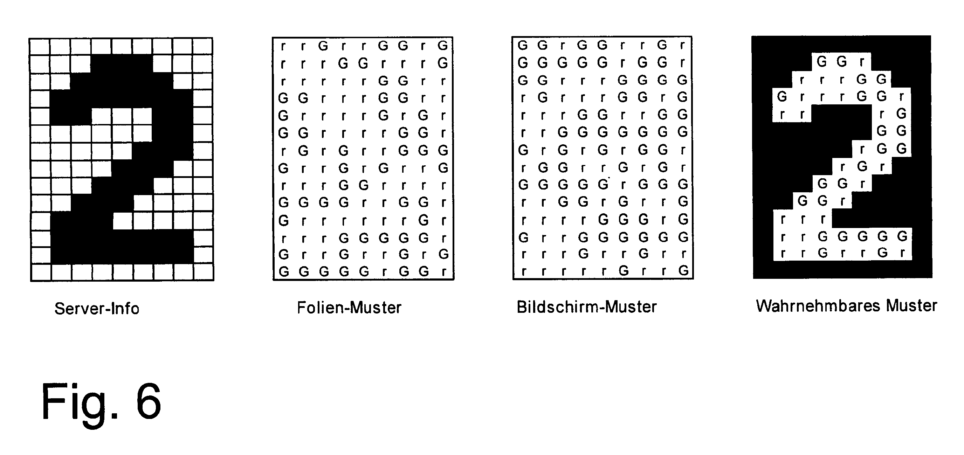

In Fig. 6 ist nochmals gezeigt, wie beispielsweise die Ziffer 2 zunächst verschlüsselt und danach vom Nutzer wahrgenommen wird. Der Server 1 gibt zunächst die Ziffer 2 als binäres Muster vor. Danach ermittelt die Recheneinheit 9 anhand der Datenbank in dem Speicher 10, das Entschlüsselungsmuster (Folien-Muster) des Nutzers. Die Recheneinheit 9 erzeugt dann ein komplementäres Muster, das jedoch bei den Bildpunkten, bei denen die Zifferndarstellung einen schwarzen Bildpunkt aufweist, die gleiche Farbe hat, wie das Entschlüsselungsmuster auf der Folie 11. Die beiden mittleren Muster der Fig. 6 zeigen dies. In der obersten Zeile sind die Bildpunkte einander komplementär. In der zweiten Zeile sind die ersten drei Bildpunkte einander komplementär, die nächsten drei Bildpunkte, welche zu der Darstellung der Ziffer 2 gehören, sind bei dem Entschlüsselungsmuster auf der Folie 11 und bei dem auf der Anzeigeeinrichtung 3 angezeigten Muster identisch. Die letzten drei Bildpunkte der zweiten Zeile sind dann wieder komplementär. Rechts in der Fig. 6 ist das wahrnehmbare Muster dargestellt, wenn das angezeigte Muster durch das Entschlüsselungsmuster der Folie 11 betrachtet wird. In der zweiten Zeile ergeben sich zunächst drei schwarze Bildpunkte, da das Entschlüsselungsmuster der Folie 11 bei diesen Bildpunkten einen Filter enthält, der komplementär zu der angezeigten Farbe der Bildpunkte der verschlüsselten Eingabemaske ist. Die nächsten zwei Bildpunkte erscheinen grün (Symbol "G" in der Darstellung der Fig. 6), da diese Bildpunkte sowohl von der verschlüsselten Eingabemaske grün dargestellt werden, als auch grüne Filter bei dem Entschlüsselungsmuster der Folie 11 vorgesehen sind. Der darauffolgende Bildpunkt erschein aus den gleichen Gründen rot (Symbol "r") und die letzten drei Bildpunkte erscheinen erneut schwarz.

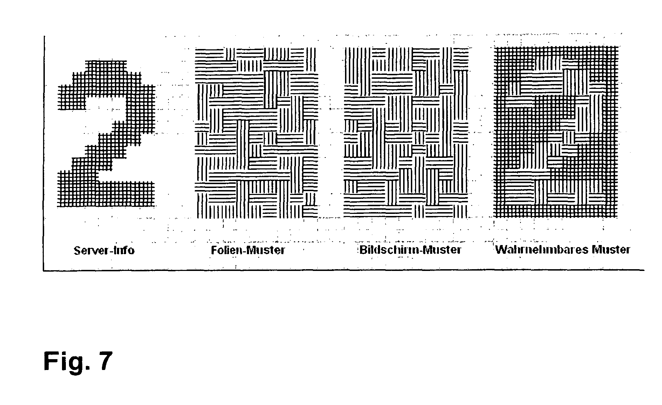

Die binäre Verschlüsselung bzw. Entschlüsselung kann auch auf andere Weise erfolgen. In Fig. 7 ist ein solches Beispiel gezeigt, bei welchem die Bildpunkte aus Bereichen mit horizontalen oder vertikalen Linien bestehen.

Neben der Anzeigeeinrichtung 3 bei der Datenverarbeitungseinrichtung des Nutzers ist die einzige Hardwarevoraussetzung für das erfindungsgemäße System bzw. das erfindungsgemäße Verfahren, dass die Folie 11 mit dem Entschlüsselungsmuster im Besitz des Nutzers ist. Die Folie 11 ist dann jedoch universell bei den verschiedensten Datenverarbeitungseinrichtungen einsetzbar. Sogar ein Einsatz mit Mobiltelefonen, welche ein Display aufweisen, ist denkbar. Die Folie 11 ist sehr kostengünstig herstellbar und kann sehr einfach, z. B. in einem Brief, an den Nutzer verschickt werden. Außerdem kann der Nutzer die Folie 11 sehr einfach mit sich führen, da sie sehr klein und dünn ist. Sie kann z. B. so dünn wie ein Geldschein sein und die Größe einer herkömmlichen Kreditkarte aufweisen.

Das vorstehend beschriebene Verfahren kann ferner beispielsweise zum Authentifizieren eines Nutzers gegenüber einem E-Commerce-Anbieter verwendet werden. Hierfür identifiziert der Nutzer sich zunächst über einen Namen gegenüber dem E-Commerce-Anbieter. Dieser Name ist an sich nicht vertraulich. Es ist unbedenklich, wenn dieser Name von einem unberechtigten Dritten ausspioniert wird. Anhand dieses Namens kann der E-Commerce-Anbieter jedoch das Entschlüsselungsmuster des entsprechenden Nutzers ermitteln und - wie vorstehend beschrieben - eine entsprechende verschlüsselte Eingabemaske erzeugen und an den Nutzer übertragen. Dieser kann dann mittels seiner Folie 11 die Eingabemaske entschlüsseln und seinen persönlichen Code wie vorstehend beschrieben eingeben, der ihn sicher gegenüber dem E-Commerce-Anbieter authentifiziert.

Auf gleiche Weise kann mit dem erfindungsgemäßen Verfahren auch der Einlog-Vorgang in ein Firmennetzwerk erfolgen. Der Nutzer kann sich hier auf sichere Weise durch die Eingabe eines Passworts mittels der Entschlüsselung der verschlüsselt angezeigten Eingabeanweisungen authentifizieren.

Des Weiteren kann das Verfahren in Verbindung mit einem Online-Banking-Verfahren eingesetzt werden. Der Nutzer kann in diesem Fall alle sicherheitsrelevanten Daten, d.h. insbesondere seine Authentifizierung, d.h. seinen persönlichen Code und Daten für eine Online-Überweisung, durch das vorstehend beschriebene Verfahren an den Bankserver übertragen. Insbesondere die Daten zum Betrag der Online-Überweisung und die Daten zu dem Empfänger der Überweisung sollten über die verschlüsselt angezeigte Eingabemaske eingegeben und auf diese Weise verschlüsselt übertragen werden. Ein derartiges Online-Banking-Verfahren ist insbesondere gegen die eingangs erläuterte "Man-In-The-Middle-Attacke" abgesichert. Zur weiteren Steigerung der Sicherheit könnte die verschlüsselte Eingabemaske auch mehrmals während der Eingabe der einzelnen Daten gewechselt werden. Auf diese Weise kann auch ein Schutz gegen die vorgenannte sogenannte "Replay-Attacke" erreicht werden. Die Verwendung von sogenannten Transaktionsnummern wäre in diesem Fall nicht erforderlich. Sie schützen im Übrigen auch nicht gegen Manipulationen durch einen zwischengeschalteten Computer eines unberechtigten Dritten.

## Patentansprüche

1. Verfahren zum Übertragen von Daten von einer ersten Datenverarbeitungseinrichtung (2) an eine zweite Datenverarbeitungseinrichtung (1), wobei die erste Datenverarbeitungseinrichtung (2) eine Anzeigeeinrichtung (3) aufweist, bei dem
- die zweite Datenverarbeitungseinrichtung (1) verschlüsselte Eingabeanweisungen erzeugt und an die erste Datenverarbeitungseinrichtung (2) überträgt,
- die erste Datenverarbeitungseinrichtung (2) die verschlüsselten Eingabeanweisungen anzeigt,
- die verschlüsselten Eingabeanweisungen **dadurch** entschlüsselt werden, dass sie durch einen optischen Filter mit einem Entschlüsselungsmuster betrachtet werden, und
- die zu übertragenden Daten mittels der durch den optischen Filter entschlüsselten Eingabeanweisungen in die erste Datenverarbeitungseinrichtung (2) eingegeben und an die zweite Datenverarbeitungseinrichtung (1) übertragen werden.

2. Verfahren nach Anspruch 1, **dadurch gekennzeichnet, dass** die Eingabeanweisungen eine Eingabemaske sind und dass die zu übertragenden Daten mit Hilfe der durch den optischen Filter entschlüsselten Eingabemaske in die erste Datenverarbeitungseinrichtung (2) eingegeben werden.

3. Verfahren nach einem der Ansprüche 1 oder 2, **dadurch gekennzeichnet, dass** das Entschlüsselungsmuster ein binäres Bildmuster ist, dass beim Erzeugen der verschlüsselten Eingabeanweisungen ein zum Entschlüsselungsmuster komplementäres oder identisches binäres Bildmuster generiert wird und dass bei den Bildpunkten des komplementären Bildmusters, welche die Eingabeanweisungen bilden sollen, der Zustand der Bildpunkte gewechselt wird, so dass sie dem der entsprechenden Bildpunkte des Entschlüsselungsmusters entsprechen oder zu diesen komplementär sind.

4. Verfahren nach Anspruch 1, **dadurch gekennzeichnet, dass** die Eingabeanweisungen einen Code enthalten, und dass der Code nach der durch den optischen Filter bewirkten Entschlüsselung in die erste Datenverarbeitungseinrichtung (2) eingegeben und an die zweite Datenverarbeitungseinrichtung (1) übertragen wird.

5. Verfahren zum Authentifizieren eines Nutzers gegenüber einem E-Commerce-Anbieter, bei dem der Nutzer einen persönlichen Code in seine Datenverarbeitungseinrichtung (2) eingibt und ihn an eine Datenverarbeitungseinrichtung (1) des E-Commerce-Anbieters überträgt, **dadurch gekennzeichnet, dass** die Eingabe und Übertragung des persönlichen Codes durch das Verfahren nach einem der Ansprüche 1 bis 4 erfolgt.

6. Online-Banking-Verfahren, bei dem sich ein Nutzer bei einem Bankserver (1) authentifiziert und danach die für einen Online-Überweisungsvorgang erforderlichen Daten eingibt und diese Daten an den Bankserver übertragen werden, **dadurch gekennzeichnet, dass** die Authentifizierung des Nutzers und die Eingabe und Übertragung zumindest eines Teils der für den Online-Überweisungsvorgang erforderlichen Daten durch das Verfahren nach einem der Ansprüche 1 bis 4 erfolgt.

7. System zum Übertragen von Daten von einer ersten Datenverarbeitungseinrichtung (2) an eine zweite Datenverarbeitungseinrichtung (1), wobei die erste Datenverarbeitungseinrichtung (2) eine Anzeigeeinrichtung (3) aufweist, **dadurch gekennzeichnet, dass**
- ein optischer Filter für die Anzeigeeinrichtung (3) der ersten Datenverarbeitungseinrichtung (2) vorgesehen ist, der ein Entschlüsselungsmuster enthält,
- die zweite Datenverarbeitungseinrichtung (1) einen Speicher (10) aufweist, in dem das Entschlüsselungsmuster oder Informationen über das Entschlüsselungsmuster des Filters gespeichert ist/sind, und
- die zweite Datenverarbeitungseinrichtung (1) eine Einrichtung (9) zum Erzeugen von verschlüsselten Eingabeanweisungen aufweist, wobei die verschlüsselten Eingabeanweisungen in Abhängigkeit von dem gespeicherten Entschlüsselungsmuster oder den gespeicherten Informationen so erzeugbar sind, dass bei einer Anzeige der verschlüsselten Eingabeanweisungen dieselben durch Betrachten durch den optischen Filter entschlüsselt werden.

8. System nach Anspruch 7, **dadurch gekennzeichnet, dass** das Entschlüsselungsmuster Bildpunkte aus optischen Filtern für zwei Komplementärfarben enthält.

9. System nach einem der Ansprüche 7 oder 8, **dadurch gekennzeichnet, dass** der optische Filter eine zumindest teilweise transparente Folie (11) oder Karte ist.

10. System nach einem der Ansprüche 7 bis 9, **dadurch gekennzeichnet, dass** die Eingabeanweisungen eine Eingabemaske darstellen, dass die erste Datenverarbeitungseinrichtung (2) eine Eingabeeinrichtung (5) zur Auswahleinrichtung von Bereichen der Anzeigeeinrichtung (3) aufweist, über die Daten mittels der entschlüsselten Eingabemaske eingebbar sind.
